(19) **Europäisches Patentamt**
**European Patent Office**
**Office européen des brevets**

(11) **EP 4 546 901 A1**

(12) **EUROPEAN PATENT APPLICATION**
published in accordance with Art. 153(4) EPC

(43) Date of publication:
30.04.2025 Bulletin 2025/18

(21) Application number: 23845223.9

(22) Date of filing: 29.06.2023

(51) International Patent Classification (IPC):
*H04W 56/00* (2009.01)

(52) Cooperative Patent Classification (CPC):
H04W 24/02; H04W 56/00

(86) International application number:
PCT/CN2023/104213

(87) International publication number:
WO 2024/022010 (01.02.2024 Gazette 2024/05)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 26.07.2022 CN 202210885616

(71) Applicant: Huawei Technologies Co., Ltd.
Shenzhen, Guangdong 518129 (CN)

(72) Inventors:
• XU, Fan
Shenzhen, Guangdong 518129 (CN)
• YAN, Wenbo
Shenzhen, Guangdong 518129 (CN)
• CHEN, Yunman
Shenzhen, Guangdong 518129 (CN)

(74) Representative: Gill Jennings & Every LLP
The Broadgate Tower
20 Primrose Street
London EC2A 2ES (GB)

(54) **CLOCK SIGNAL PROCESSING METHOD AND APPARATUS, AND WIRELESS DISTRIBUTION SYSTEM**

(57) This application provides a clock signal processing method, and is applied to the field of wireless communication. The clock signal processing method includes the following steps: A first AP receives first indication information from an AC. The first AP uses the first indication information as a trigger signal, and modifies first clock information of a first time counter based on a beacon beacon interval, to obtain second clock information. A minimum difference between the second clock information and N×BI is less than a minimum difference between the first clock information and N×BI. N×BI is an integer multiple of the beacon interval. The first AP sends a first beacon frame. The first beacon frame includes the second clock information. In this application, clock information of a time counter is modified by using a BI interval, so that modified clock information can be close to an integer multiple of the BI interval. Therefore, a probability that a STA receives a beacon frame is increased, and reliability of communication is improved.

FIG. 1

**Description**

This application claims priority to Chinese Patent Application No. 202210885616.6, filed with the China National Intellectual Property Administration on July 26, 2022 and entitled "CLOCK SIGNAL PROCESSING METHOD, APPARATUS, AND WIRELESS DISTRIBUTION SYSTEM", which is incorporated herein by reference in its entirety.

**TECHNICAL FIELD**

This application relates to the field of wireless communication, and in particular, to a clock signal processing method and a wireless distribution system (wireless distribution system, WDS).

**BACKGROUND**

In the field of wireless communication, a plurality of access points (access points, APs) can form a WDS through frame interaction. To reduce air interface contention, a sending time point of signaling of the AP may be controlled by using an access controller (access controller, AC). For example, the signaling may be a beacon (beacon) frame. A procedure in which the AC controls the AP to send the beacon frame is as follows. The AC periodically sends indication information to the AP. Duration of an interval is a beacon interval (beacon interval, BI interval). After receiving the indication information, the AP obtains a reading of a time counter, and generates the beacon frame based on the reading and another parameter. Then, the AP sends the beacon frame to an associated station (station, STA). The dormant STA periodically wakes up to snoop the beacon frame. A wake-up interval of the STA is also the BI interval. A moment at which the STA wakes up is close to an integer multiple of the BI interval.

During actual application, there is an offset between a time counter of the AC and the time counter of the AP. As a result, the reading that is of the time counter and that is carried in the beacon frame may not be an integer multiple of the BI interval. The STA may fail to receive the beacon frame, and reliability of communication is consequently reduced.

**SUMMARY**

This application provides a clock signal processing method, an apparatus, and a wireless distribution system. Clock information of a time counter is modified by using a BI interval, so that modified clock information can be close to an integer multiple of the BI interval. Therefore, a probability that a STA receives a beacon frame is increased, and reliability of communication is improved.

According to a first aspect of this application, a clock signal processing method is provided. The clock signal processing method includes the following steps: A first AP receives first indication information from an AC. The first AP uses the first indication information as a trigger signal, and modifies first clock information of a first time counter based on a beacon interval, to obtain second clock information. A minimum difference between the second clock information and $N \times BI$ is less than a minimum difference between the first clock information and $N \times BI$. $N \times BI$ is an integer multiple of the beacon interval. The first AP sends a first beacon frame. The first beacon frame includes the second clock information.

In an optional manner of the first aspect, the first indication information is a beacon frame or a signaling frame. The signaling frame is also referred to as a management frame. When the AC is associated with a STA, the AC also needs to broadcast or multicast a beacon frame. The beacon frame broadcast by the AC serves as the first indication information, so that a transmission resource of the AC can be saved.

In an optional manner of the first aspect, before the first AP receives the first indication information from the AC, the clock signal processing method includes the following steps: The first AP receives target indication information from the AC. The target indication information includes an identifier of the AC. The first AP uses, based on the target indication information, the first indication information that carries the identifier of the AC as the trigger signal. The first AP is not a STA associated with the AC. As a result, the first AP does not process, by default, the beacon frame sent by the AC. To enable the first AP to use, as the trigger signal, the beacon frame sent by the AC, related manual configuration may be performed on the first AP. In this application, automatic configuration is performed by using the target indication information, so that configuration efficiency can be improved.

In an optional manner of the first aspect, the identifier of the AC is a custom identifier. In some scenarios, the AC and the AP may share a same BSSID. If the identifier of the AC is the BSSID, the first AP may further modify the first clock information based on a beacon frame sent by another AP. As a result, confusion in clock signal processing is caused. In addition, an IP address of the AC may change. If the identifier of the AC is the IP address, the first AP needs to perform corresponding reconfiguration based on a change of the IP address. If the first AP does not perform corresponding reconfiguration, the first AP may fail to perform clock signal processing. In this application, the custom identifier is used, so that reliability of clock signal processing can be improved.

In an optional manner of the first aspect, the second clock information is an integer multiple of the beacon interval.

A difference between the second clock information and the first clock information is less than or equal to 0.5 BI. BI is the beacon interval. 0 is also an integer multiple of the beacon interval. When the second clock information is an integer multiple of the beacon interval, a probability that a STA receives a beacon frame can be increased, and reliability of communication can be improved.

In an optional manner of the first aspect, if mod (T1, BI)/BI<0.5, T2=T1-mod (T1, BI). If mod (T1, BI)/BI≥0.5, T2=T1+BI-mod (T1, BI). T1 is the first clock information, and T2 is the second clock information.

In an optional manner of the first aspect, the first clock information is a reading of the first time counter. When the first AP generates the first beacon frame, the first AP obtains a reading of a current time point of the first time counter. The first AP fills the reading in the first beacon frame. The reading of the first time counter is modified, so that complexity of clock signal processing can be reduced.

In an optional manner of the first aspect, the first clock information is the current time point of the first time counter. The current time point of the first time counter is modified, so that a time offset between a time counter of the AC and the time counter of the first AP can be reduced, and further clock signal processing is implemented. In addition, air interface contention between the AC and the first AP can be reduced through clock signal processing. Therefore, in this application, the air interface contention can be reduced, and transmission efficiency can be improved.

In an optional manner of the first aspect, the first AP sends the first beacon frame at a second moment. The first AP modifies the first clock information of the first time counter at a first moment based on the beacon interval and a time offset. The time offset is a difference between the second moment and the first moment. The time offset is introduced, so that the clock information carried in the first beacon frame can be more accurately controlled. Therefore, in this application, the modified clock information can be closer to an integer multiple of the BI interval, so that a probability that a STA receives a beacon frame is increased, and reliability of communication is improved.

In an optional manner of the first aspect, the first beacon frame serves as a trigger signal for a second AP to modify clock information of a second time counter, and a second beacon frame is sent based on modified clock information. A WDS may further include another AP, for example, the second AP. A clock signal processing chain (the AC-the first AP-the second AP) is established, so that clock signal processing of the WDS can be further implemented. In addition, air interface contention between the AC and the AP can be reduced through clock signal processing. Therefore, in this application, the air interface contention can be reduced, and transmission efficiency can be improved.

In an optional manner of the first aspect, the clock signal processing method includes the following steps: The first AP receives second indication information from the AC. The second indication information includes a tolerance T0. The first AP obtains third clock information T3 of the first time counter. The first AP calculates an interval offset OFFSET based on T3 and the beacon interval. If mod (T3, BI)<0.5 BI, OFFSET=mod (T3, BI). If mod (T3, BI)≥0.5 BI, OFFSET=BI-mod (T3, BI). If OFFSET>T0, the first AP updates the third clock information based on the beacon interval, to obtain fourth clock information. The first AP sends a third beacon frame. The third beacon frame includes the fourth clock information. If OFFSET≤T0, the first AP sends a fourth beacon frame. The fourth beacon frame includes the third clock information. T0 is introduced, so that the first AP can determine, based on the interval offset, whether to update the third clock information. Therefore, if an offset between the time counter of the AC and the time counter of the first AP is not large, the first AP may not need to frequently perform clock signal processing. Therefore, in this application, a frequency of clock signal processing can be reduced, so that a processing resource of the first AP can be saved.

In an optional manner of the first aspect, a value of T0 ranges from 10 milliseconds to 30 milliseconds.

According to a second aspect of this application, a clock signal processing method provided. The clock signal processing method includes the following steps: An AC sends first indication information to a first AP. The first indication information serves as a trigger signal for the first AP to modify first clock information of a first time counter based on a beacon interval, to obtain second clock information. A first beacon frame is sent based on the second clock information, where the first beacon frame includes the second clock information. A minimum difference between the second clock information and N×BI is less than a minimum difference between the first clock information and N×BI. N×BI is an integer multiple of the beacon interval.

In an optional manner of the second aspect, the first indication information is a beacon frame or a signaling frame.

In an optional manner of the second aspect, before the AC sends the first indication information to the first AP, the clock signal processing method includes the following steps: The AC sends target indication information to the first AP. The target indication information includes an identifier of the AC. The target indication information indicates the first AP to use the first indication information that carries the identifier of the AC as the trigger signal.

In an optional manner of the second aspect, the identifier of the AC is a custom identifier.

In an optional manner of the second aspect, the clock signal processing method includes the following steps: The AC sends second indication information to the first AP. The second indication information includes a tolerance T0. T0 is used by the first AP to determine, based on T0 and the beacon interval, whether to update third clock information of the first time counter.

In an optional manner of the second aspect, a value of T0 ranges from 10 milliseconds to 30 milliseconds.

According to a third aspect of this application, a wireless distribution system is provided. The wireless distribution system includes a first AP and an AC. The AC is configured to send first indication information. The first AP is configured to receive the first indication information from the AC. The first AP is further configured to use the first indication information as a trigger signal, and modifies first clock information of a first time counter based on a beacon interval, to obtain second clock information. A minimum difference between the second clock information and N×BI is less than a minimum difference between the first clock information and N×BI. N×BI is an integer multiple of the beacon interval. The first AP is further configured to send a first beacon frame, where the first beacon frame includes the second clock information.

In an optional manner of the third aspect, the first indication information is a beacon frame or a signaling frame.

In an optional manner of the third aspect, the AC is further configured to send target indication information to the first AP. The first AP is further configured to receive the target indication information from the AC. The target indication information includes an identifier of the AC. The first AP is further configured to use, based on the target indication information, the first indication information that carries the identifier of the AC as the trigger signal.

In an optional manner of the third aspect, the identifier of the AC is a custom identifier.

In an optional manner of the third aspect, the second clock information is an integer multiple of the beacon interval. A difference between the second clock information and the first clock information is less than or equal to 0.5 BI. BI is the beacon interval.

In an optional manner of the third aspect, if mod (T1, BI)/BI<0.5, T2=T1-mod (T1, BI). If mod (T1, BI)/BI≥0.5, T2=T1+BI-mod (T1, BI). T1 is the first clock information, and T2 is the second clock information.

In an optional manner of the third aspect, the first clock information is a reading of the first time counter.

In an optional manner of the third aspect, the first clock information is a current time point of the first time counter.

In an optional manner of the third aspect, the first AP is configured to send the first beacon frame at a second moment. The first AP is configured to modify the first clock information of the first time counter at a first moment based on the beacon interval and a time offset. The time offset is a difference between the second moment and the first moment.

In an optional manner of the third aspect, the first beacon frame serves as a trigger signal for a second AP to modify clock information of a second time counter, and a second beacon frame is sent based on modified clock information.

In an optional manner of the third aspect, the first AP is further configured to receive second indication information from the AC, where the second indication information includes a tolerance T0. The first AP is further configured to obtain third clock information T3 of the first time counter. The first AP is further configured to calculate an interval offset OFFSET based on T3 and the beacon interval. If mod (T3, BI)<0.5 BI, OFFSET=mod (T3, BI). If mod (T3, BI)≥0.5 BI, OFFSET=BI-mod (T3, BI). If OFFSET>T0, the first AP is further configured to update the third clock information based on the beacon interval, to obtain fourth clock information. The first AP is further configured to send a third beacon frame. The third beacon frame includes the fourth clock information. If OFFSET≤T0, the first AP is further configured to send a fourth beacon frame. The fourth beacon frame includes the third clock information.

In an optional manner of the third aspect, a value of T0 ranges from 10 milliseconds to 30 milliseconds.

According to a fourth aspect of this application, a first AP is provided. The first AP includes a receiving module, a modification module, and a sending module. The receiving module is configured to receive first indication information from an AC. The modification module is configured to use the first indication information as a trigger signal, and modifies first clock information of a first time counter based on a beacon interval, to obtain second clock information. A minimum difference between the second clock information and N×BI is less than a minimum difference between the first clock information and N×BI. N×BI is an integer multiple of the beacon interval. The sending module is configured to send a first beacon frame. The first beacon frame includes the second clock information.

In an optional manner of the fourth aspect, the modules in the first AP are configured to perform the method in any one of optional manners of the first aspect.

According to a fifth aspect of this application, an AC is provided. The AC includes a generation module and a sending module. The generation module is configured to generate first indication information. The sending module is configured to send the first indication information to a first AP. The first indication information serves as a trigger signal for the first AP to modify first clock information of a first time counter based on a beacon interval, to obtain second clock information. The second clock information is used by the first AP to send a first beacon frame based on the second clock information. The first beacon frame includes the second clock information. A minimum difference between the second clock information and N×BI is less than a minimum difference between the first clock information and N×BI. N×BI is an integer multiple of the beacon interval.

In an optional manner of the fifth aspect, the modules in the AC are configured to perform the method in any one of optional manners of the second aspect.

According to a sixth aspect of this application, a first AP is provided. The first AP includes a processor and a transceiver. The transceiver is configured to receive first indication information from an AC. The processor is configured to use the first indication information as a trigger signal, and modifies first clock information of a first time counter based on a beacon interval, to obtain second clock information. The transceiver is further configured to send a first beacon frame. The first beacon frame includes the second clock information. A minimum difference between the second clock information and N×BI is less than a minimum difference between the first clock information and N×BI. N×BI is an integer multiple of the beacon interval.

In an optional manner of the sixth aspect, the processor and/or the transceiver are/is further configured to perform the method in any one of optional manners of the first aspect.

According to a seventh aspect of this application, an AC is provided. The AC includes a processor and a transceiver. The processor is configured to generate first indication information. The transceiver is configured to send the first indication information to a first access point AP. The first indication information serves as a trigger signal for the first AP to modify first clock information of a first time counter based on a beacon interval, to obtain second clock information. A minimum difference between the second clock information and $N \times BI$ is less than a minimum difference between the first clock information and $N \times BI$. $N \times BI$ is an integer multiple of the beacon interval. The second clock information is used by the first AP to send a first beacon frame based on the second clock information. The first beacon frame includes the second clock information.

In an optional manner of the seventh aspect, the processor and/or the transceiver are/is further configured to perform the method in any one of optional manners of the second aspect.

According to an eighth aspect of this application, a computer storage medium is provided, and the computer storage medium stores instructions. When the instructions are executed on a computer, the computer is enabled to perform the method in any one of the first aspect or implementations of the first aspect; or the computer is enabled to perform the method in any one of the second aspect or implementations of the second aspect.

According to a ninth aspect of this application, a computer program product is provided. When the computer program product runs on a computer, the computer is enabled to perform the method in any one of the first aspect or implementations of the first aspect; or the computer is enabled to perform the method in any one of the second aspect or implementations of the second aspect.

## BRIEF DESCRIPTION OF DRAWINGS

FIG. 1 is a first schematic flowchart of a clock signal processing method according to an embodiment of this application;

FIG. 2 is a second schematic flowchart of a clock signal processing method according to an embodiment of this application;

FIG. 3 is a schematic diagram of a first structure of a signaling frame according to an embodiment of this application;

FIG. 4 is a schematic diagram of a second structure of a signaling frame according to an embodiment of this application;

FIG. 5 is a third schematic flowchart of a clock signal processing method according to an embodiment of this application;

FIG. 6 is a schematic diagram of a structure of a first AP according to an embodiment of this application;

FIG. 7 is a schematic diagram of a structure of an AC according to an embodiment of this application;

FIG. 8 is a schematic diagram of a structure of a communication device according to an embodiment of this application; and

FIG. 9 is a schematic diagram of a structure of a wireless distribution system according to an embodiment of this application.

## DESCRIPTION OF EMBODIMENTS

This application provides a clock signal processing method, an apparatus, and a wireless distribution system. Clock information of a time counter is modified by using a BI interval, so that modified clock information can be close to an integer multiple of the BI interval. Therefore, a probability that a STA receives a beacon frame is increased, and reliability of communication is improved. It should be understood that "first", "second", "target", and the like used in this application are merely for differentiation and description, but cannot be understood as an indication or implication of relative importance or an indication or implication of a sequence.

The clock signal processing method provided in this application is applied to the field of wireless communication. In the field of wireless communication, to reduce air interface contention, sending duration of signaling of an AP may be controlled by using an access controller (access controller, AC). For example, the signaling may be a beacon (beacon) frame. The beacon frame carries a reading of a time counter of the AP. However, there is an offset between a time counter of the AC and the time counter of the AP. As a result, the reading that is of the time counter and that is carried in the beacon frame may not be an integer multiple of the BI interval. The STA may fail to receive the beacon frame, and reliability of communication is consequently reduced.

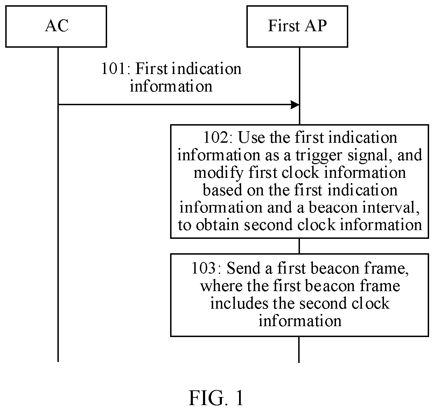

Therefore, this application provides a clock signal processing method. FIG. 1 is a first schematic flowchart of a clock signal processing method according to an embodiment of this application. As shown in FIG. 1, the clock signal processing method includes the following steps.

In step 101, an AC sends first indication information to a first AP. During actual application, the AC may also be associated with some STAs. Therefore, the AC also needs to periodically send a beacon frame. The first indication information may be the beacon frame sent by the AC. Alternatively, it can be learned from the foregoing descriptions that, the AC controls sending duration of signaling of the AP by using a signaling frame. The first indication information may alternatively be the signaling frame sent by the AC. Alternatively, the first indication information may be another signaling frame. This is not limited in this embodiment of this application.

In step 102, the first AP uses the first indication information as a trigger signal, and modifies first clock information based on the first indication information and a beacon interval, to obtain second clock information. The first AP includes a first time counter. The first clock information may be a reading of the first time counter or a current time point of the first time counter. The reading of the first time counter is read from the current time point of the first time counter. As time changes, the current time point of the first time counter changes. Therefore, if the current time point of the first time counter is modified, a subsequent reading of the first time counter is affected.

The beacon interval is also referred to as a BI interval. The beacon interval refers to an interval at which the first AP sends a beacon frame. For example, the beacon interval is 300 milliseconds. During actual application, there is an offset between a time counter of the AC and the time counter of the first AP. Therefore, for same duration, a reading change of the time counter of the AC is different from a reading change of the time counter of the first AP. For example, the AC sends the first indication information based on the beacon interval. The beacon interval is 300 milliseconds (which is a reading change of the time counter of the AC in one beacon interval). In this case, a reading change of the time counter of the first AP in one beacon interval is not 300 milliseconds. For example, the reading change is 298 milliseconds or 302 milliseconds. Therefore, the first AP modifies the first clock information based on the beacon interval, to obtain the second clock information. A minimum difference between the second clock information and $N \times BI$ is less than a minimum difference between the first clock information and $N \times BI$. $N \times BI$ is an integer multiple of the beacon interval. N is an integer greater than or equal to 0. For example, the first clock information is 298 milliseconds, and the second clock information is 299 milliseconds. For another example, the first clock information is 622 milliseconds, and the second clock information is 600 milliseconds.

In step 103, the first AP sends a first beacon frame, where the first beacon frame includes the second clock information. In a process of generating the first beacon frame, the first AP needs to obtain a reading of the current time point of the first time counter, and fill the reading in the first beacon frame. It is assumed that a moment at which the first AP sends the first beacon frame is the same as a moment at which the first AP generates the first beacon frame. The first AP modifies the first clock information at a first moment, to obtain the second clock information. The first AP generates the first beacon frame at a second moment. The first moment may be the same as or different from the second moment. This is described separately below.

It can be learned from the foregoing descriptions that, the first clock information may be the reading of the first time counter or the current time point of the first time counter. When the first moment is the same as the second moment, the first clock information may be the reading of the first time counter. Specifically, after the first AP obtains the reading of the current time point of the first time counter, the first AP uses the reading as the first clock information. The first AP modifies the reading, to obtain the second clock information. When the first moment is different from the second moment, the first clock information may be the current time point of the first time counter. Specifically, before the first AP obtains the reading of the current time point of the first time counter, the first AP uses the current time point of the first time counter as the first clock information. The first AP modifies the current time point, to obtain the second clock information. Then, the first AP reads a reading of a current time point that is obtained through modification and that is of the first time counter.

It should be understood that, when the first clock information is the current time point of the first time counter, a specific value of the second clock information carried in the first beacon frame may be different from a specific value of a current time point that is of the second clock information and that is modified by the first AP. For example, the first clock information is 250 milliseconds. The second clock information obtained through modification is 300 milliseconds, in other words, the first moment is 300 milliseconds. The first AP generates the first beacon frame at 305 milliseconds, in other words, the second moment is 305 milliseconds. In this case, the first beacon frame carries 305 milliseconds. The specific value of the modified current time point of the second clock information is 300 milliseconds.

In this embodiment of this application, the first AP periodically receives the first indication information and sends the beacon frame. An interval at which the first AP receives the first indication information may be the same as or different from the interval at which the first AP sends the beacon frame. For example, both the interval at which the first AP receives the first indication information and the interval at which the first AP sends the beacon frame are the beacon interval. For another example, the interval at which the first AP receives the first indication information is M beacon intervals, where M is an integer greater than 1, and the interval at which the first AP sends the beacon frame is the beacon interval.

In this embodiment of this application, clock information of a time counter is modified by using a BI interval, so that modified clock information can be close to an integer multiple of the BI interval. Therefore, a probability that a STA receives a beacon frame is increased, and reliability of communication is improved.

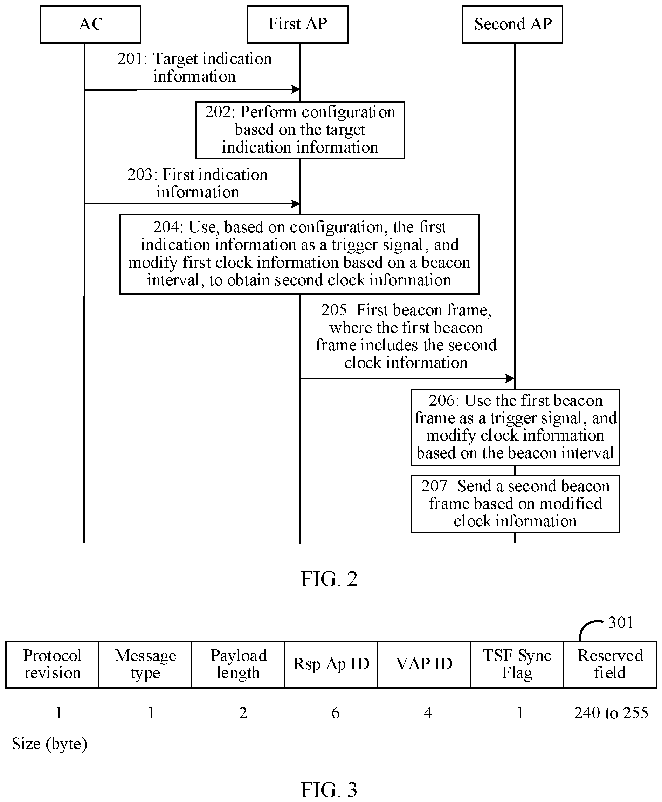

FIG. 2 is a second schematic flowchart of a clock signal processing method according to an embodiment of this application. As shown in FIG. 2, the clock signal processing method includes the following steps.

In step 201, an AC sends target indication information to a first AP. The target indication information includes an identifier of the AC. The identifier of the AC may be an internet protocol address (internet protocol address, IP address), a basic service set identifier (basic service set identifier, BSSID), or a custom identifier of the AC. During actual application, a person skilled in the art may design a format of the target indication information based on a requirement. The format of the target indication information is not limited in this application.

In step 202, the first AP performs configuration based on the target indication information. Only after performing configuration, the first AP uses, as a trigger signal, subsequently received first indication information that includes the identifier of the AC. For example, when the first indication information is a beacon frame sent by the AC, before performing configuration, the first AP does not use, as the trigger signal, the beacon frame sent by the AC. Only after performing configuration, the first AP uses, based on the identifier of the AC and as the trigger signal, the beacon frame sent by the AC. The beacon frame sent by the AC includes the identifier of the AC.

In step 203, the AC sends the first indication information to the first AP. Specific implementation of step 203 is similar to the descriptions of step 101 in FIG. 1. It can be learned from the descriptions of step 101 that, the first indication information may be a signaling frame. FIG. 3 is a schematic diagram of a first structure of a signaling frame according to an embodiment of this application. As shown in FIG. 3, a signaling frame 301 includes a plurality of fields. A parameter and a meaning of each of the plurality of fields are shown in Table 1. A size of each of the plurality of fields is shown in FIG. 3.

**Table 1**

| Parameter type | Parameter | Meaning |
|---|---|---|
| Basic message information | Protocol revision | Protocol revision (Protocol Revision) |
| | Message type | Message type (Message Type) |
| | Payload size | Payload length (Payload Size) |
| AP index message | Rsp AP ID | The AC indicates an AP to which the message is sent. |
| | VAP ID | The AC indicates a VAP ID of an AP to which the message is sent. |
| Signaling frame sending parameter | TSF Sync Flag | Indicating whether a TSF is synchronized |
| | Reserved field | Reserved field (Reserve) |

In Table 1, the timing synchronization function synchronization flag (Timing Synchronization Function Sync Flag, TSF Sync Flag) field indicates whether the AP performs subsequent step 204. For example, when the TSF Sync Flag field is 1, it indicates that the first AP performs subsequent step 204. When the TSF Sync Flag field is 0, it indicates that the first AP does not perform subsequent step 204, and directly performs subsequent step 205. In this case, the first beacon frame carries first clock information. In this embodiment of this application, the response access point identification (Response Access Point identification, Rsp Ap ID) field carries an identifier of the first AP. The virtual access point identification (Virtual Access Point identification, VAP ID) field may carry an identifier of a VAP in the first AP. The VAP corresponding to the identifier performs the clock signal processing method in this embodiment of this application.

In step 204, the first AP uses, based on configuration, the first indication information as the trigger signal, and modifies the first clock information based on a beacon interval, to obtain second clock information. Specific implementation of step 204 is similar to the descriptions of step 102 in FIG. 1. It can be learned from the foregoing descriptions of step 102 that, the first clock information may be a reading of a first time counter or a current time point of the first time counter. In a subsequent example, an example in which the first clock information is the current time point of the first time counter is used for description.

It can be learned from the foregoing descriptions of FIG. 1 that, the clock information is modified, so that modified clock information can be closer to an integer multiple of the beacon interval. In an example, both the second clock information and clock information of a previous interval are an integer multiple of the beacon interval. In addition, a difference between the second clock information and the first clock information is less than or equal to $0.5 \times$ beacon interval (0.5 BI). Specifically, the first AP may modify the first clock information based on the following formulas.

$$\text{If mod } (T1, BI)/BI < 0.5, T2 = T1 - \text{mod } (T1, BI).$$

$$\text{If mod (T1, BI)/BI} \geq 0.5, \text{T2=T1+BI}-\text{mod (T1, BI)}.$$

T1 is the first clock information, and T2 is the second clock information. It is assumed that BI is 300 milliseconds. When T1 is 50, T2 is 0. When T1 is 250, T2 is 300.

It can be learned from the foregoing descriptions of FIG. 1 that, because a first moment may be different from a second moment, a specific value of the second clock information carried in the first beacon frame may be different from a specific value of a current time point that is of the second clock information and that is modified by the first AP. For example, the specific value of the second clock information carried in the first beacon frame is 305 milliseconds, and the specific value of the modified current time point of the second clock information is 300 milliseconds. In this case, the second clock information carried in the first beacon frame is not an integer multiple of the beacon interval. Therefore, the first AP may modify the first clock information of the first time counter based on the first indication information, the beacon interval, and a time offset. The time offset is a difference between the second moment and the first moment. The first AP modifies the first clock information at the first moment. The first AP generates the first beacon frame at the second moment. Specifically, the first AP may modify the first clock information based on the following formulas.

$$\text{If mod (T1, BI)/BI} < 0.5, \text{T2=T1}-\text{mod (T1, BI)}-\text{Tc}.$$

$$\text{If mod (T1, BI)/BI} \geq 0.5, \text{T2=T1+BI}-\text{mod (T1, BI)}-\text{Tc}.$$

Tc is the time offset. It is assumed that BI is 300 milliseconds and Tc is 5 milliseconds. When T1 is 50, T2 is -5 milliseconds. When T1 is 250, T2 is 295 milliseconds.

In step 205, the first AP sends the first beacon frame, where the first beacon frame includes the second clock information. Specific implementation of step 205 is similar to the descriptions of step 103 in FIG. 1. The first AP may send the first beacon frame in a multicast or broadcast manner. A format of the first beacon frame is not limited in this application.

In step 206, a second AP uses the first beacon frame as a trigger signal, and modifies clock information based on the beacon interval. The second AP uses the first beacon frame as the first indication information, and modifies the clock information by using the first indication information as the trigger signal. Descriptions of the second AP are similar to the foregoing descriptions of the first AP. For example, before receiving the first beacon frame, the second AP further receives the target indication information from the first AP. The target indication information carries a custom identifier of the first AP. The second AP performs configuration based on the target indication information. For another example, the first beacon frame carries a custom identifier of the first AP. The second AP uses, based on configuration, the first beacon frame that carries the custom identifier of the first AP as the trigger signal. For another example, the second AP may modify the clock information based on a time offset and the beacon interval. The time offset is a moment at which the second AP modifies the clock information and a moment at which the second AP generates a second beacon frame. For another example, the second AP includes a second time counter. The clock information may be a reading of the second time counter or a current time point of the second time counter.

In step 207, the second AP sends the second beacon frame based on modified clock information. Specific implementation of step 207 is similar to that of step 205. For example, the second beacon frame carries the modified clock information. For example, the second AP may send the second beacon frame in a multicast or broadcast manner.

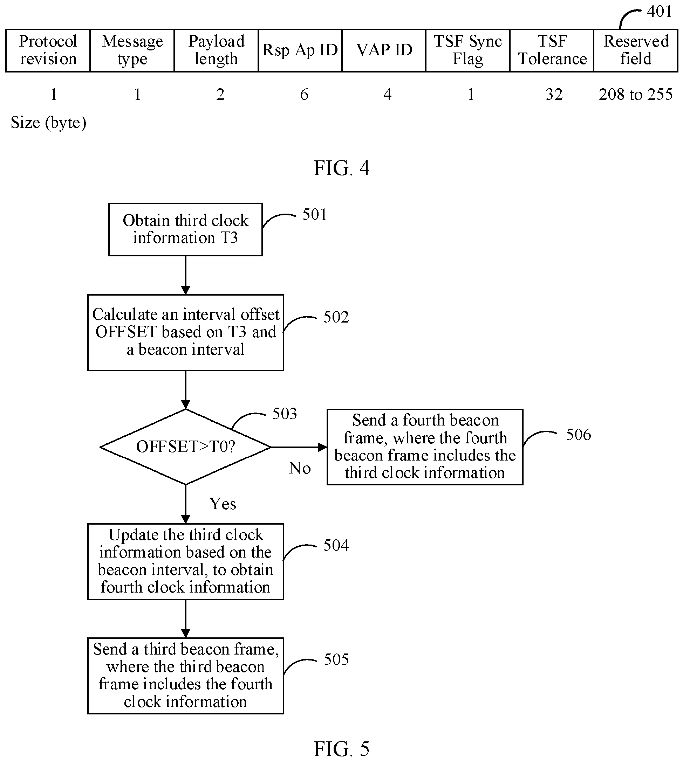

It should be understood that the format of the signaling frame in FIG. 3 is merely an example provided in this embodiment of this application. For example, FIG. 4 is a schematic diagram of a second structure of a signaling frame according to an embodiment of this application. As shown in FIG. 4, based on FIG. 3, a signaling frame 401 further includes a timing synchronization function tolerance (Timing Synchronization Function Tolerance, TSF Tolerance) field. The TSF Tolerance field carries a tolerance T0.

During actual application, the first AP may periodically perform step 203 to step 205. For example, after sending the first beacon frame, the first AP further receives second indication information from the AC. The first AP obtains the tolerance T0. The tolerance T0 may be carried in the second indication information or the target indication information. The tolerance T0 is less than BI/2. For example, a value of T0 may range from 10 milliseconds to 30 milliseconds. T0 may be 10 milliseconds or 30 milliseconds.

The first AP may modify third clock information based on the second indication information, the tolerance T0, and the beacon interval, to obtain fourth clock information. FIG. 5 is a third schematic flowchart of a clock signal processing method according to an embodiment of this application. As shown in FIG. 5, the clock signal processing method includes the following steps.

In step 501, a first AP obtains third clock information T3. Descriptions of the third clock information T3 are similar to the descriptions of the first clock information.

In step 502, the first AP calculates an interval offset OFFSET based on T3 and a beacon interval. The first AP may calculate the interval offset OFFSET based on the following formulas.

If mod (T3, BI)<0.5 BI, OFFSET=mod (T3, BI). For example, it is assumed that BI is 300 milliseconds. When T3 is 50 milliseconds, OFFSET is equal to 50 milliseconds.

If mod (T3, BI)≥0.5 BI, OFFSET=BI-mod (T3, BI). For example, it is assumed that BI is 300 milliseconds. When T3 is 295 milliseconds, OFFSET is equal to 5 milliseconds.

In step 503, the first AP determines whether the interval offset OFFSET is greater than a tolerance T0. If the interval offset OFFSET is greater than the tolerance T0, step 504 is performed. If the interval offset OFFSET is not greater than the tolerance T0, step 506 is performed. It is assumed that T0 is 10 milliseconds. When OFFSET is equal to 50 milliseconds, the first AP performs step 504. When OFFSET is equal to 5 milliseconds, the first AP performs step 506.

In step 504, the first AP modifies the third clock information based on the beacon interval, to obtain fourth clock information. Specific implementation of step 504 is similar to the descriptions of step 204 in FIG. 2.

In step 505, the first AP sends a third beacon frame. The third beacon frame includes the fourth clock information. Specific implementation of step 505 is similar to the descriptions of step 205 in FIG. 2.

In step 506, the first AP sends a fourth beacon frame. The fourth beacon frame includes the third clock information. For example, the third clock information is a current time point of a first time counter. The first AP obtains a reading of the current time point of the first time counter, and fills the reading in the fourth beacon frame. After generating the fourth beacon frame, the first AP sends the fourth beacon frame.

In the clock signal processing method shown in FIG. 5, T0 is introduced, so that the first AP can determine, based on the interval offset, whether to update the third clock information. Therefore, if an offset between the time counter of the AC and the time counter of the first AP is not large, the first AP may not need to frequently perform clock signal processing. Therefore, in this application, a frequency of clock signal processing can be reduced, so that a processing resource of the first AP can be saved.

It should be understood that specific implementation of step 204 in FIG. 2 is similar to the descriptions in FIG. 5. Specifically, the first AP may determine, based on T0 and the beacon interval, whether to update the first clock information of the first time counter. If the first AP determines to update the first clock information, the first AP performs step 205. If the first AP determines not to update the first clock information, a first beacon frame sent by the first AP may carry the first clock information.

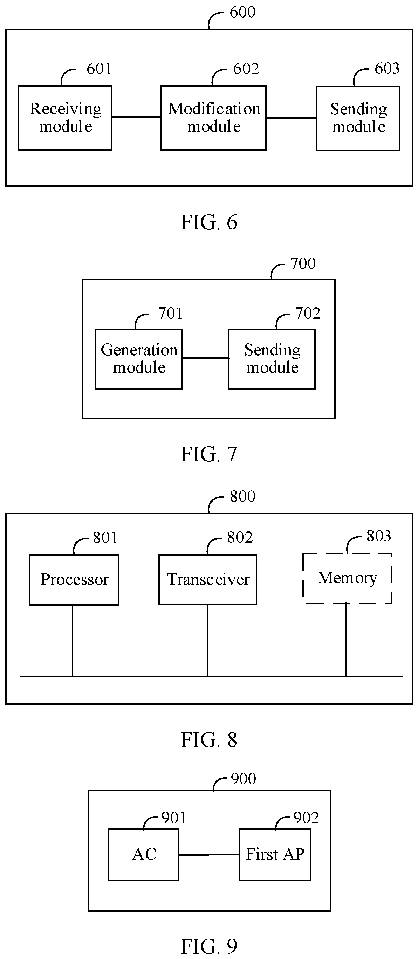

The foregoing describes the clock signal processing method provided in this application, and the following describes the first AP provided in this application. FIG. 6 is a schematic diagram of a structure of a first AP according to an embodiment of this application. As shown in FIG. 6, a first AP 600 includes a receiving module 601, a modification module 602, and a sending module 603. The receiving module 601 is configured to receive first indication information from an AC. The modification module 602 is configured to use the first indication information as a trigger signal, and modify first clock information of a first time counter based on a beacon interval, to obtain second clock information. A minimum difference between the second clock information and N×BI is less than a minimum difference between the first clock information and N×BI. N×BI is an integer multiple of the beacon interval. The sending module 603 is configured to send a first beacon frame. The first beacon frame includes the second clock information.

It should be understood that descriptions of the first AP 600 are similar to the descriptions in the foregoing clock signal processing method. For example, the receiving module 601 may be further configured to receive target indication information from the AC. For another example, the first AP 600 may further include a configuration module. The configuration module is configured to perform configuration based on the target indication information. For another example, the modification module 602 is configured to modify the first clock information of the first time counter based on the first indication information, the beacon interval, and a time offset, to obtain the second clock information.

FIG. 7 is a schematic diagram of a structure of an AC according to an embodiment of this application. As shown in FIG. 7, an AC 700 includes a generation module 701 and a sending module 702. The generation module 701 is configured to generate first indication information. The sending module 702 is configured to send the first indication information to a first AP. The first indication information serves as a trigger signal for the first AP to modify first clock information of a first time counter based on a beacon interval, to obtain second clock information. The second clock information is used by the first AP to send a first beacon frame based on the second clock information. The first beacon frame includes the second clock information. A minimum difference between the second clock information and N×BI is less than a minimum difference between the first clock information and N×BI. N×BI is an integer multiple of the beacon interval.

It should be understood that descriptions of the AC 700 are similar to the descriptions in the foregoing clock signal processing method. For example, the sending module 702 is further configured to send target indication information to the first AP. For another example, the first indication information or the target indication information carries a tolerance T0. For another example, the first indication information or the target indication information carries a custom identifier of the AC 700.

FIG. 8 is a schematic diagram of a structure of a communication device according to an embodiment of this application. The communication device may be a first AP or an AC. As shown in FIG. 8, a communication device 800 includes a processor 801 and a transceiver 802. The processor 801 may be a central processing unit (central processing unit, CPU), a network processor (network processor, NP), or a combination of the CPU and the NP. The processor 801 may further include a hardware chip or another general-purpose processor. The foregoing hardware chip may be an application-specific integrated circuit (application-specific integrated circuit, ASIC), a programmable logic device (programmable logic device, PLD), or a combination of the ASIC and the PLD. The transceiver 802 may be an optical transceiver or a wireless transceiver.

When the communication device 800 is a first AP, the transceiver 802 is configured to receive first indication information from an AC. The processor 801 is configured to use the first indication information as a trigger signal, and modifies first clock information of a first time counter based on a beacon interval, to obtain second clock information. A minimum difference between the second clock information and N×BI is less than a minimum difference between the first clock information and N×BI. N×BI is an integer multiple of the beacon interval. The transceiver 802 is further configured to send a first beacon frame. The first beacon frame includes the second clock information.

When the communication device 800 is an AC, the processor 801 is configured to generate first indication information. The transceiver 802 is configured to send the first indication information to a first AP. The first indication information serves as a trigger signal for the first AP to modify first clock information of a first time counter based on a beacon interval, to obtain second clock information. A minimum difference between the second clock information and N×BI is less than a minimum difference between the first clock information and N×BI. N×BI is an integer multiple of the beacon interval. The second clock information is used by the first AP to send a first beacon frame based on the second clock information. The first beacon frame includes the second clock information.

In another embodiment, the communication device 800 may further include a memory 803. The memory 803 may be a volatile memory or a non-volatile memory, or may include both the volatile memory and the non-volatile memory. The non-volatile memory may be a read-only memory (read-only memory, ROM), a programmable read-only memory (programmable ROM, PROM), an erasable programmable read-only memory (erasable PROM, EPROM), a flash memory, or the like. The volatile memory may be a random access memory (random access memory, RAM). The memory 803 may be configured to store a tolerance T0, a current time point of a time counter, or the like.

It should be understood that descriptions of the communication device 800 are similar to the descriptions in the foregoing clock signal processing method. For example, when the communication device 800 is the AC, the transceiver 802 is further configured to send the target indication information to the first AP. For another example, when the communication device 800 is the first AP, the processor 801 is further configured to perform configuration based on the target indication information.

This application further provides a wireless distribution system. FIG. 9 is a schematic diagram of a structure of a wireless distribution system according to an embodiment of this application. As shown in FIG. 9, a wireless distribution system 900 includes a first AP 902 and an AC 901. The AC 901 is configured to send first indication information. The first AP 902 is configured to receive the first indication information from the AC 901. The first AP 902 is further configured to use the first indication information as a trigger signal, and modifies first clock information of a first time counter based on a beacon interval, to obtain second clock information. A minimum difference between the second clock information and N×BI is less than a minimum difference between the first clock information and N×BI. N×BI is an integer multiple of the beacon interval. The first AP 902 is further configured to send a first beacon frame, where the first beacon frame includes the second clock information.

It should be understood that descriptions of the first AP 902 are similar to the descriptions of FIG. 6 or FIG. 8. Descriptions of the receiving device AC 901 are similar to the descriptions of FIG. 7 or FIG. 8.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

**Claims**

1. A clock signal processing method, comprising:

   receiving, by a first access point AP, first indication information from an access controller AC;
   using, by the first AP, the first indication information as a trigger signal, and modifying first clock information of a first time counter based on a beacon interval, to obtain second clock information, wherein a minimum difference between the second clock information and N×BI is less than a minimum difference between the first clock information and N×BI, and N×BI is an integer multiple of the beacon interval; and
   sending, by the first AP, a first beacon frame, wherein the first beacon frame comprises the second clock information.

2. The method according to claim 1, wherein the first indication information is a beacon frame or a signaling frame.

3. The method according to claim 2, wherein before the receiving, by a first AP, first indication information from an AC, the method further comprises:

    receiving, by the first AP, target indication information from the AC, wherein the target indication information comprises an identifier of the AC; and
    using, by the first AP based on the target indication information, the first indication information that carries the identifier of the AC as the trigger signal.

4. The method according to any one of claims 1 to 3, wherein the second clock information is an integer multiple of the beacon interval, a difference between the second clock information and the first clock information is less than or equal to 0.5 BI, and BI is the beacon interval.

5. The method according to claim 4, wherein the modifying, by the first AP, first clock information of a first time counter based on a beacon interval, to obtain second clock information comprises:

$$\text{if mod } (T1, BI)/BI<0.5, T2=T1-\text{mod } (T1, BI);$$

or

$$\text{if mod } (T1, BI)/BI\geq0.5, T2=T1+BI-\text{mod } (T1, BI),$$

wherein
T1 is the first clock information, and T2 is the second clock information.

6. The method of any one of claims 1 to 5, wherein the first clock information is a reading or a current time point of the first time counter.

7. The method according to claim 6, wherein

    the sending, by the first AP, a first beacon frame comprises: sending, by the first AP, the first beacon frame at a second moment; and
    the modifying, by the first AP, first clock information of a first time counter based on a beacon interval comprises: modifying, by the first AP based on the beacon interval and a time offset, the first clock information of the first time counter at a first moment, wherein
    the time offset is a difference between the second moment and the first moment.

8. The method according to any one of claims 1 to 7, wherein the first beacon frame serves as a trigger signal for a second AP to modify clock information of a second time counter, and a second beacon frame is sent based on modified clock information.

9. The method according to any one of claims 1 to 8, wherein the method further comprises:

    receiving, by the first AP, second indication information from the AC, wherein the second indication information comprises a tolerance T0;
    obtaining, by the first AP, third clock information T3 of the first time counter;
    calculating, by the first AP based on T3 and the beacon interval, an interval offset OFFSET, wherein

$$\text{if mod } (T3, BI)<0.5 \text{ BI, OFFSET}=\text{mod } (T3, BI); \text{ or if mod } (T3, BI)\geq0.5 \text{ BI, OFFSET}=BI-\text{mod } (T3, BI);$$

    and
    if OFFSET>T0, updating, by the first AP, the third clock information based on the beacon interval, to obtain fourth clock information; and
    sending, by the first AP, a third beacon frame, wherein the third beacon frame comprises the fourth clock information; or

if OFFSET≤T0, sending, by the first AP, a fourth beacon frame, wherein the fourth beacon frame comprises the third clock information.

10. The method according to claim 9, wherein a value of T0 ranges from 10 milliseconds to 30 milliseconds.

11. A clock signal processing method, comprising:
sending, by an access controller AC, first indication information to a first access point AP, wherein the first indication information serves as a trigger signal for the first AP to modify first clock information of a first time counter based on a beacon interval, to obtain second clock information; and sending a first beacon frame based on the second clock information, wherein the first beacon frame comprises the second clock information, a minimum difference between the second clock information and N×BI is less than a minimum difference between the first clock information and N×BI, and N×BI is an integer multiple of the beacon interval.

12. The method according to claim 11, wherein before the sending, by an AC, first indication information to a first AP, the method further comprises:
sending, by the AC, target indication information to the first AP, wherein the target indication information comprises an identifier of the AC, and the target indication information indicates the first AP to use the first indication information that carries the identifier of the AC as the trigger signal.

13. The method according to either of claims 11 and 12, wherein the method further comprises:
sending, by the AC, second indication information to the first AP, wherein the second indication information comprises a tolerance T0, and T0 is used by the first AP to determine, based on T0 and the beacon interval, whether to update third clock information of the first time counter.

14. A wireless distribution system, comprising a first access point AP and an access controller AC, wherein

the AC is configured to send first indication information;
the first AP is configured to receive the first indication information from the AC, use the first indication information as a trigger signal, and modify first clock information of a first time counter based on a beacon interval, to obtain second clock information, wherein a minimum difference between the second clock information and N×BI is less than a minimum difference between the first clock information and N×BI, and N×BI is an integer multiple of the beacon interval; and
the first AP is further configured to send a first beacon frame, wherein the first beacon frame comprises the second clock information.

15. A first access point AP, comprising a processor and a transceiver, wherein the processor and the transceiver perform collaborative processing, and are configured to perform the method according to any one of claims 1 to 10.

16. An access controller AC, comprising a processor and a transceiver, wherein the processor and the transceiver perform collaborative processing, and are configured to perform the method according to any one of claims 11 to 13.

| AC | First AP |
|---|---|

101: First indication information →

102: Use the first indication information as a trigger signal, and modify first clock information based on the first indication information and a beacon interval, to obtain second clock information

103: Send a first beacon frame, where the first beacon frame includes the second clock information

FIG. 1

FIG. 2

FIG. 3

~ 401

| Protocol revision | Message type | Payload length | Rsp Ap ID | VAP ID | TSF Sync Flag | TSF Tolerance | Reserved field |
|---|---|---|---|---|---|---|---|
| 1 | 1 | 2 | 6 | 4 | 1 | 32 | 208 to 255 |

Size (byte)

FIG. 4

```
    ┌─────────────────────┐
    │   Obtain third clock │ ~ 501
    │   information T3     │
    └─────────────────────┘
              │
              ▼
    ┌─────────────────────┐
    │ Calculate an interval offset │ ~ 502
    │ OFFSET based on T3 and │
    │   a beacon interval │
    └─────────────────────┘
              │
              ▼                          ~ 503           ┌────────────────────────┐
         ◇─────────◇                                     │  Send a fourth beacon  │
        ╱           ╲                                     │ frame, where the fourth │ ~ 506
       ◇  OFFSET>T0?  ◇ ─────────────────────────────────▶│ beacon frame includes the │
        ╲           ╱                   No                │  third clock information │
         ◇─────────◇                                      └────────────────────────┘
              │
             Yes
              ▼
    ┌─────────────────────┐
    │  Update the third clock │ ~ 504
    │ information based on the │
    │ beacon interval, to obtain │
    │ fourth clock information │
    └─────────────────────┘
              │
              ▼
    ┌─────────────────────┐
    │ Send a third beacon frame, │ ~ 505
    │ where the third beacon │
    │ frame includes the fourth │
    │   clock information │
    └─────────────────────┘
```

FIG. 5

600

| Receiving module 601 | Modification module 602 | Sending module 603 |

FIG. 6

700

| Generation module 701 | Sending module 702 |

FIG. 7

800

| Processor 801 | Transceiver 802 | Memory 803 |

FIG. 8

900

| AC 901 | First AP 902 |

FIG. 9

## INTERNATIONAL SEARCH REPORT

| International application No. |
| --- |
| **PCT/CN2023/104213** |

| **A.** | **CLASSIFICATION OF SUBJECT MATTER** |
| --- | --- |

H04W 56/00(2009.01)i

According to International Patent Classification (IPC) or to both national classification and IPC

| **B.** | **FIELDS SEARCHED** |
| --- | --- |

Minimum documentation searched (classification system followed by classification symbols)

IPC: H04W, H04L

Documentation searched other than minimum documentation to the extent that such documents are included in the fields searched

Electronic data base consulted during the international search (name of data base and, where practicable, search terms used)

CNTXT, ENTXT, CNKI: 信标, 接入点, 节点, 接入控制器, 网络管理器, 网络控制器, 周期, 间隔, 计数器, 时钟, 同步, 修改, 调整, 无线分布式系统, beacon, AP, node, AC, NC, period, interval, counter, clock, synchronization, BI, beacon interval, update, modify, adjust, WDS

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| A | US 2010202422 A1 (PANASONIC CORP.) 12 August 2010 (2010-08-12)<br>description, paragraphs 55-134 | 1-16 |
| A | CN 103379595 A (HUAWEI TECHNOLOGIES CO., LTD.) 30 October 2013 (2013-10-30)<br>entire document | 1-16 |
| A | CN 108632829 A (ZTE CORP.) 09 October 2018 (2018-10-09)<br>entire document | 1-16 |
| A | WO 2019227869 A1 (HUAWEI TECHNOLOGIES CO., LTD.) 05 December 2019<br>(2019-12-05)<br>entire document | 1-16 |
| A | 陈健等 (CHEN, Jian et al.). "基于WLAN信标的连续时钟同步算法 (Continuous Clock Synchronization Based on WLAN Beacon)"<br>上海大学学报(自然科学版) (Journal of Shanghai University (Natural Science Edition)),<br>Vol. 15, No. 4, 31 August 2009 (2009-08-31),<br>entire document | 1-16 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **03 August 2023** | **10 August 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/104213**

| Patent document cited in search report | | | Publication date (day/month/year) | Patent family member(s) | | | Publication date (day/month/year) |
|---|---|---|---|---|---|---|---|
| US | 2010202422 | A1 | 12 August 2010 | WO | 2007077619 | A1 | 12 July 2007 |
| | | | | AT | 500708 | T | 15 March 2011 |
| | | | | JP | 2009522827 | A | 11 June 2009 |
| | | | | EP | 2373115 | A1 | 05 October 2011 |
| | | | | DE | 602005026729 | D1 | 14 April 2011 |
| | | | | EP | 1966947 | A1 | 10 September 2008 |
| CN | 103379595 | A | 30 October 2013 | None | | | |
| CN | 108632829 | A | 09 October 2018 | US | 2018279209 | A1 | 27 September 2018 |
| WO | 2019227869 | A1 | 05 December 2019 | None | | | |

Form PCT/ISA/210 (patent family annex) (July 2022)

**EP 4 546 901 A1**

**REFERENCES CITED IN THE DESCRIPTION**

**Patent documents cited in the description**

- CN 202210885616